# EUROPEAN PATENT APPLICATION

(11) **EP 3 498 671 A1**
(43) Date of publication of application: **19.06.2019**
(21) Application number: 17207842.0
(22) Date of filing: 15.12.2017
(51) Int. Cl.: C01B 33/158, C08J 9/35, C08K 3/36, C08K 7/26

(54) **SUPERINSULATING SILICA AEROGEL WITH HIGH STIFFNESS AND DENSITY**

(71) Applicant: EMPA Eidgenössische Materialprüfungs- und Forschungsanstalt, 8600 Dübendorf (CH); Recticel N.V., 1140 Brussels (BE)
(72) Inventor: Iswar, Subramaniam, CH-8600 Dübendorf (CH); Malfait, Wim, CH-8053 Zürich (CH); Koebel, Matthias, 8306 Brüttisellen (CH); Snellings, Geert, B-9230 Wetteren (BE)
(74) Representative: Schmauder & Partner AG Patent- & Markenanwälte VSP

(57) **Abstract**

A method of producing a silica aerogel material in granulate or powder form, comprises the steps of:
a) preparing a silicon oxide gel in a solvent selected from organic solvents, water, and mixtures thereof;
b) triggering of the gelation of the sol by adding a gelation triggering agent, thereby forming a gel having an initial SiO₂ equivalent concentration of 3 to 13 % by weight;
c) subjecting the gel to an aging process for a predetermined aging time (t_{A}), thereby forming an aged gel;
d) subjecting the aged gel obtained in step c) to a hydrophobization step;
e) removing the solvent mixture by subcritical drying, thereby forming the aerogel material.

The predetermined aging time (t_{A}) is selected such that the aerogel material has a bulk aerogel density (ρ_{A}) in the range of 1.15 to 3 times a limiting aerogel density (ρ_{∞}) obtainable in the limit of long aging times. The method allows production of a silica aerogel material in granulate or powder form with low thermal conductivity in combination with good mechanical stiffness.

## Description

### Field of the Invention

The invention generally relates to a novel aerogel material and to a process for producing the same.

### Background of the Invention

Aerogels are known for their excellent thermal insulation properties and used in a variety of industrial applications [2]. Silica aerogel insulations constitute a significant market (around 250 million USD in 2016), but their application potential is restricted by the high production cost and poor mechanical properties [1], such as a very low compressive (E) modulus and brittle nature [3,4]. Silica aerogels are the most researched aerogels amongst the class of aerogels. A lot of scientific and patent literature is focused on improving mechanical properties of silica aerogels through reinforcement with (bio)polymers. On the other hand, higher density aerogels display strongly increased E-moduli, but the increase in density is accompanied by an often undesirable increase in thermal conductivity [5-7].

The thermal conductivity λ of aerogels is made up of three components: thermal conduction by the gas phase, solid phase and radiation. Aerogels owe their extremely low thermal conductivity due to the unique combination of a low density and small pores. In the pertinent technical literature, the density is generally called "low" in view of the much higher densities of most other solid materials. However, in the context of presently envisioned applications, the density should better be understood to be "optimal" or "intermediate" for the following reasons. When going to extremely low densities, the pore sizes become progressively larger and the gas phase thermal conduction therefore increases, whereas at higher densities the solid thermal conduction through the silica skeletal network increases. Accordingly, to produce the lowest conductivity materials, it is necessary to find an optimum balance between these contributions. The aerogel density is a parameter which helps in satisfying the different thermal contributions of these materials [7-9].

According to the current paradigm, all aerogel materials display a minimum in thermal conductivity at an intermediate density. For example, Fricke et al. showed that for a monolithic opacified silica aerogel, the minimum thermal conductivity is ∼13 mW/(m•K) for a density at ∼0.12 g/cm³ [5,10]. In another study, polyethoxydisiloxane (PEDS) based silica aerogels showed a minimum λ value of 13.5 mW/(m•K), also for a density of 0.12 g/cm³ [11]. This type of behavior (i.e. a minimum in thermal conductivity at intermediate density) is also observed for other aerogel type materials, although the density for which the thermal conductivity is minimal is different for different aerogel materials. For example, thermal conductivities as low as 12 mW/(m•K) were reported for organic resorcinol-formaldehyde (RF) aerogels for a density at ∼0.16 g/cm³ [6,10,12]. Additionally, polyurea based aerogels show a minimum λ value of 13 mW/(m•K) value at the final density around 0.20 g/cm³[13] and polyurethane-polyisocyanurate (PUR-PIR) aerogels display a minimum λ value of 19 mW/(m•K) for densities around 0.22 g/cm³ [14]. Isocyanate derived polymer aerogels display minimum λ values in the range of 17 to 19 mW/(m•K) for densities in the range of 0.15 to 0.25 g/cm³, albeit with significantly improved mechanical properties, particularly improved tensile and shear strength (see e.g. product description for SLENTITE® by BASF).

### References:

[1] M. Koebel, A. Rigacci, P. Achard, J. Sol-Gel Sci. Technol. 63 (2012) 315-339.
[2] J. Fricke, J. Non. Cryst. Solids 100 (1988) 169-173.
[3] T. Woignier, J. Phalippou, J. Non. Cryst. Solids 100 (1988) 404-408.
[4] T. Woignier, H. Phalippou J, H. Hdach, G.W. Scherer, Mater. Res. Soc. 180 (1990) 1087-1099.
[5] J. Fricke, X. Lu, P. Wang, D. Buettner, U. Heinemann, Int. J. Heat Mass Transf. 35 (1992) 2305-2309.
[6] X. Lu, M.C. Arduini-Schuster, J. Kuhn, O. Nilsson, J. Fricke, R.W. Pekala, Science 255 (1992) 971-972.
[7] N. Hüsing, U. Schubert, Angew. Chemie Int. Ed. 37 (1998) 22-45.
[8] L.W. Hrubesh, R.W. Pekala, J. Mater. Res. 9 (1994) 731-738.
[9] H. Ebert, in:, M.A. Aegerter, N. Leventis, M.M. Koebel (Eds.), Aerogel Handb., Springer New York, New York, NY, 2011, pp. 537-564.
[10] X. Lu, P. Wang, M.C. Arduini-Schuster, J. Kuhn, D. Büttner, O. Nilsson, U. Heinemann, J. Fricke, J. Non. Cryst. Solids 145 (1992) 207-210.
[11] J.C.H. Wong, H. Kaymak, S. Brunner, M.M. Koebel, Microporous Mesoporous Mater. 183 (2014) 23-29.
[12] X. Lu, R. Caps, J. Fricke, C.T. Alviso, R.W. Pekala, J. Non. Cryst. Solids 188 (1995) 226-234.
[13] J.K. Lee, G.L. Gould, W. Rhine, J. Sol-Gel Sci. Technol. 49 (2008) 209-220.
[14] Superinsulating polyisocyanate based aerogels: a targeted search for the optimum solvent system. Z Zhu, G Snellings, MM Koebel, WJ Malfait. ACS Applied Materials & Interfaces. 9 (2017), 18222-18230.

### Summary of the Invention

It is an object of the present invention to provide improved silica aerogel materials, methods for producing the same and various applications thereof.

According to one aspect of the invention (claim 1), there is provided a method of producing a silica aerogel material in granulate or powder form, comprising the steps of:
a) preparing a silicon oxide gel in a solvent selected from organic solvents, water, and mixtures thereof;
b) triggering of the gelation of the sol by adding a gelation triggering agent, thereby forming a gel having an initial SiO₂ equivalent concentration of 3 to 13 % by weight;
c) subjecting the gel to an aging process for a predetermined aging time (t_{A}), thereby forming an aged gel;
d) subjecting the aged gel obtained in step c) to a hydrophobization step; and
e) removing the solvent mixture by subcritical drying, thereby forming the aerogel material;
wherein the predetermined aging time (t_{A}) is selected such that the aerogel material has a bulk aerogel density (ρ_{A}) in the range of 1.15 to 3 times a limiting aerogel density (ρ_{∞}) obtainable in the limit of long aging times.

It was surprisingly found that in a process as defined above, if the step of aging the gel is not pursued until completion, the resulting aerogel material has an unusually low thermal conductivity for its relatively high density. This leads to the conclusion that incomplete aging of the gel in combination with subcritical drying opens a new way to form aerogel materials with low thermal conductivity in combination with high density and stiffness.

In order to implement the above finding in a practical production process, the degree of gel aging needs to be quantified. While it is conceivable to monitor the degree of aging directly during the aging process through an appropriate surrogate parameter, it may generally be more appropriate to adopt an indirect approach involving a sort of calibration or pre-characterization. In simple words, one should first define the general parameters of the intended production process, e.g. selection of the materials, type of silicon oxide system, solvent, relative amounts of components, hydrophobization step and parameters of the subcritical drying step. Subsequently, one should conduct a series of measurements in which steps a) to e) are carried out identically with the aging time t_{A} being the sole variable. This will allow determination of the final bulk aerogel density ρ_{A}, i.e. of the density of the silica aerogel material obtained after step e), as a function of aging time t_{A}.

It is generally established that under the above defined process conditions, particularly with an initial SiO₂ equivalent concentration of 3 to 13 % by weight, the obtainable final bulk aerogel density ρ_{A} monotonically decreases as a function of aging time t_{A} and eventually levels off to asymptotically approach a value ρ_{∞} in the limit of long aging times. This value ρ_{∞} is further referred to as "limiting aerogel density". The rate of density decreases versus aging time depends on the process conditions, such as the composition and pH of the sol, or the aging temperature [Effect of aging on silica aerogel properties. S Iswar, WJ Malfait, S Balog, F Winnefeld, M Lattuada, MM Koebel. Microporous and Mesoporous Materials 241, 293-302, 2017]. Aging for an infinite amount of time is obviously not possible in practice, and we therefore considered ρ_{∞} to be reached when the aerogel density (ρ_{A}) decreased by less than 10% for an additional 8 hours of aging for our specific sol composition and processing conditions. Accordingly, the ratio ρ_{A}/ρ_{∞} monotonically decreases to asymptotically reach a value of 1 in the limit of long aging times. By relying on this functional dependence, it is possible to define a desired ratio ρ_{A}/ρ_{∞} and therefrom determine the required aging time t_{A}. Once this is known, the method of producing the silica aerogel material is carried out using in step c) an aging time t_{A} as previously determined. Specifically, the aging time t_{A} shall be selected in such manner that the ratio ρ_{A}/ρ_{∞} is in the range of 1.15 to 3.

The above finding has allowed formation of silica aerogel granulates with over twice the density that is standard for superinsulating silica aerogel (>0.25 versus 0.12 g/cm³) without sacrificing the low thermal conductivity of ∼15 mW/(m•K) for a broad density range between 0.114 and 0.289 g/cm³. Without being bound by theory, it appears that the low thermal conductivity obtainable by using a comparatively short aging time leads to thinner inter-particle necks, a higher surface area and smaller pore sizes, and to a more tortuous structure as a result of controlled, partial pore collapse during ambient pressure drying. Also, the high-density materials have strongly improved mechanical properties with stiffness increased by a factor of 2 to 12 compared to a conventional, commercial silica aerogel (bulk density ∼0.1 g/cm³) without a penalty in thermal conductivity. Therefore, according to another aspect of the invention, there is provided a silica aerogel material in granulate or powder form obtainable by the above defined method, the material having the following properties in combination:
A) either
   - a packed bed thermal conductivity λ_{pack} of < 0.019 W/(m•K);
   - a bulk thermal conductivity λ_{bulk} of 0.012 to 0.016 W/(m•K);
   - a bulk density ρ_{bulk} of 0.15 to 0.25 g/cm³; and
   - a stiffness k increased by a factor of 3 to 20 compared to a reference silica aerogel material with a bulk density of approximately 0.1 g/cm³ and a bulk thermal conductivity of 0.012 to 0.015 W/(m•K);
B) or else
   - a packed bed thermal conductivity λ_{pack} of < 0.021 W/(m•K);
   - a bulk thermal conductivity λ_{bulk} of 0.012 to 0.018 W/(m•K);
   - a bulk density ρ_{bulk} of more than 0.25 to 0.35 g/cm³; and
   - a stiffness k increased by a factor of 10 to 100 compared to a reference silica aerogel material with a bulk density of approximately 0.1 g/cm³ and a bulk thermal conductivity of 0.012 to 0.015 W/(m•K).

In the present context, the above key properties are to be understood according to the following definitions:
- packed bed thermal conductivity λ_{pack}: the thermal conductivity determined on a packed bed of granulate and powder, mixed in a 63:37 weight ratio to optimize the filling factor. For the examples, the measurements were carried out with a miniature guarded hot-plate device described in Stahl et al. [Stahl T, Brunner S, Zimmermann M, Wakili KG. Thermo-hygric properties of a newly developed aerogel based insulation rendering for both exterior and interior applications. Energy and Buildings. 2012 Jan 31 ;44:114-7.] The thermal conductivity of composite boards was measured with the same device.
- bulk thermal conductivity λ_{bulk} : the intrinsic thermal conductivity of the aerogel material, i.e. the thermal conductivity if a large monolithic sample would be measured. For the examples, this was calibrated using the approach detailed by Huber et al. [Fast and Minimal-Solvent Production of Superinsulating Silica Aerogel Granulate, L Huber, S Zhao, WJ Malfait, S Vares, MM Koebel. Angewandte Chemie International Edition 56 (17), 4753-4756].
- bulk density ρ_{bulk}: the envelope density as determined by powder pyc-nometry. For the examples, measurements were carried out with a Geopyc 1360 instrument (Micromeritics) using a 12.7 diameter cell and force of 4N.
- stiffness k: the ability of a material to resist stress, defined as the ratio of stress over strain (k=F/δ, where F is the force and δ is the deformation). For the examples, the mechanical test of silica aerogel granulates were carried out using a micromechanical compression testing machine (FemtoTools) where the displacements are controlled with a stepper motor and compression forces measured with a capacitive load cell. The samples were compressed up to 50 µm at a rate of 1 µm/s followed by decompression at the same rate. The compression tip has a square section with 50 µm side. The measurements were repeated 4-6 times, testing at different locations on the surface of the granules and the average stiffness value was calculated from the force-displacement curves.
- Composite mechanical properties: the E-modulus and final compressive strength are determined from the stress-strain curves under uniaxial compression. For the examples, 30x30x30 mm³ cubes were compressed with a rate of 1.5 mm/minute with a Zwick press equipped with a 2kN measurement cell. The final compressive strength is taken as the maximum stress reached before fracture. The E-modulus is calculated from the slope of the linear part of the stress-strain curve (between 4 and 6% strain for the examples).

The aerogel material is generally obtained in granulate or powder form. The corresponding grain size will be in the range of 1 and 20 mm for coarse granulates, 0.1 and 1 mm for fine granulates or 0.005 to 0.1 mm for powders.

According to a further aspect of the invention, a composite material is provided comprising the silica aerogel material as defined above and further comprising a binder. Possible binders include polyacrylate, polystyrene, polyurethane, polyurea, polyisocyanurate, thermoplastic polymers, thermoset resins, water based organic resin systems such as phenol-formaldehyde, melamine formaldehyde, urea formaldehyde and related systems, waterglass, silica sol, cement, lime, and gypsum. It will be understood that the composite material may contain further components that are useful for specific applications of the material. Such components include e.g. IR opacifiers and/or flame retardants. By adding a blowing agent to the binder resin, the overall density and hence, also the associated cost price, of the composite material can be further reduced. The advantages of such composite materials arise from the favorable combination of low thermal conductivity and good mechanical performance of the aerogel material used to form the composite material.

According to a still further aspect of the invention, a composite material is provided comprising the silica aerogel material as defined above, which is incorporated in polymeric foam. Suitable polymeric foams include amongst others, polyisocyanate based foams, such as polyurethane foam (PUR), polyurea foam (PUA), polyisocyanurate foam (PIR), and polyurethane modified polyisocyanurate foam (PUR/PIR), phenolic foam (PF), polystyrene foam (EPS), foams based on polyolefins like polyethylene (LDPE, LLDPE, HDPE), polypropylene and their copolymers, as well as foams based on other thermoplastic polymers and thermoset resins. The most preferred polymeric foams are PUR and PIR foams, due to their superior thermal insulation characteristics. The silica aerogel material can be incorporated in the PUR or PIR foams, as taught by e.g. WO9600750 A1 (BASF). The amount of the silica material to be incorporated in the foam will generally be in the range of about 5 to 50% by volume calculated on the total volume of the composite material. It will be understood that the composite material may contain further components that are useful for specific applications of the material. Such components include e.g. IR opacifiers and/or flame retardants, viscosity modifying agents, surfactants, or other auxiliary substances which are commonly used in the production of PUR or PIR foams. The advantage of such composite materials arises from the favorable combination of the low thermal conductivity and the good mechanical performance of the aerogel material used to form the composite foam. Preferably the enhanced mechanical performance of the silica aerogel material according to the invention will enable to reduce the density of the polymeric foam in the composite material, whilst maintaining excellent thermal conductivity and mechanical stability. Furthermore, the proposed composite foams will have advantageous acoustical properties over polymeric foams without incorporated silica aerogel particles, due to the increased mass of the silica aerogel material.

According to still another aspect of the invention, the composite materials as described above is used as a form part, insulation board or panel. The term "form part" is generally intended to denote a part with a predetermined 3-dimensional shape whereas "board" and "panel" are intended to denote comparatively flat objects which, however, are not restricted to strictly planar objects. It will be understood that the selection of uses generally results from the advantageous properties provided by the composite material. For example, the composite materials of the present invention may be used as construction materials such as concrete, gypsum, wet applied formulations or foamed concrete. Such composite materials will generally contain the silica aerogel material of the present invention in an amount of about 10 to 95% by volume. Other possible uses of the silica aerogel containing composite material comprise its implementation in thermal insulation systems, coatings or paints.

Advantageous embodiments are defined in the dependent claims and in the examples below.

In general, the method of the present invention can be implemented with a broad variety of basically known procedures of forming an aerogel.

In the present context, the term "lower alcohol" shall refer to an alkyl hydroxide with a linear or branched alkyl group comprising 1 to 4 carbon atoms. In the following embodiments, such lower alcohol will be preferably ethanol or methanol, and most preferably ethanol.

In the present context, the term "strong acid" shall be understood as in the field of general chemistry, including in particular the strong inorganic acids such as hydrochloric acid (HCl), hydrobromic acid (HBr), sulfuric acid (H₂SO₄) and nitric acid (HNO₃). In the following embodiments, the strong acids will preferably be HCl or H₂SO₄, and most preferably HCl. However, the term "strong acid" shall also include strong organic acids such as trifluoroacetic acid.

In the present context, the term "strong base" shall be understood as in the field of general chemistry, including in particular the strong inorganic bases such as sodium hydroxide (NaOH), potassium hydroxide (KOH) and ammonia (NH₃). In the following embodiments, the strong base will preferably be NaOH.

According to a preferred embodiment, the silicon oxide sol is an alkoxide based silicon oxide sol, particularly hydrolyzed tetraethyl orthosilicate (TEOS) or polyethoxydisiloxane (PEDS). If so, different ways of triggering the gelation process are possible. According to one embodiment, the solvent is an alcoholic solvent comprising 50 to 85% by weight of a lower alcohol in water and the gelation triggering agent is a strong acid. According to another embodiment, the solvent is an alcoholic solvent comprising 92 to 98% by weight of a lower alcohol in water and the gelation triggering agent is a strong base.

According to one principal embodiment, the silicon oxide sol is a sodium silicate based silicon oxide sol, which is generally known as waterglass. If so, according to one embodiment, the silicon oxide sol is an ion exchanged water glass solution in which the sodium ions of a sodium silicate solution have been replaced by hydrogen ions; in this case, the solvent is substantially aqueous and the gelation triggering agent is a base. Alternatively, the silicon oxide sol is water glass, and again the solvent is substantially aqueous, but the gelation triggering agent is now an acid.

According to an advantageous embodiment, the hydrophobization step comprises immersing the aged gel in a solution of a silylating agent, which is preferably selected from hexamethyldisiloxane, hexamethyldisalazane and trimethylchlorosilane.

As already mentioned, the final step e) of forming the aerogel by removing the solvent mixture is carried out by subcritical drying. As will be understood, subcritical drying involves subjecting the system to a certain temperature while maintaining pressure in a range below the critical point. The relevant phase diagrams of the solvents generally used for the formation of silica aerogel materials are generally known. According to one embodiment, the subcritical drying step e) is carried out at a temperature from 30 to 200°C and a pressure of 10 mbar to 2 bar. Preferably, the temperature is selected in the range of 70 to 160°C, and more preferably 120 to 160°C and the pressure is preferably between 0.7 and 1.2 bar, and most preferably between 0.9 and 1.1 bar.

According to another advantageous embodiment, a reactive monomer or prepolymer is added in the course of steps a) through c) and will then be allowed to form a corresponding polymer. The aerogel material thus formed will comprise a predetermined polymeric fraction. According to one embodiment, the aerogel material comprises a polymeric fraction of 1 to 50% by weight. By selecting the type and content of the polymeric fraction, specific mechanical and structural properties of the silica aerogel material can be optimized.

According to yet another advantageous embodiment, the composite material further comprises a reinforcement matrix material. Such reinforcement may be provided by reinforcement fibers such as glass fibers, polyester fibers, mineral wool, ceramic fibers or natural fibers including wood, cellulose, proteins, and cotton, and/or the reinforcement may be provided by superstructures such as 3D wovens or by foams, e.g. polymer foams. The specific selection of reinforcement matrix material will of course depend on the intended application.

### Brief description of the drawings

The above mentioned and other features and objects of this invention and the manner of achieving them will become more apparent and this invention itself will be better understood by reference to the following description of various embodiments of this invention taken in conjunction with the accompanying drawings, wherein:
- Fig. 1: shows a plot of thermal conductivity λ in mW/(m•K) as a function of bulk mass density ρ_{bulk} in g/cm³ of silica aerogel granulates obtained with different aging times t_{A} : upper curve (squares): thermal conductivity of packed granulate λ_{packed}; lower curve (spheres): intrinsic thermal conductivity λ_{bulk}; the numbers next to the markers denote the aging time in hours applied for each sample;
- Fig. 2a: mechanical properties (force in mN as a function of displacement in µm) of high density silica aerogel granulate after 2 h aging and ρ_{bulk} of 0.309 g/cm³;
- Fig. 2b: mechanical properties (force in mN as a function of displacement in µm) of standard density silica aerogel granulate after 24 h aging and ρ_{bulk} of 0.118 g/cm³.

### Detailed description of the invention

Silica aerogel granulate is conventionally made by the gelation of a silica sol, a period of aging, a hydrophobization of the silica surfaces, and finally drying at subcritical pressure, i.e. by solvent evaporation. Conventionally, the aging conditions (e.g. temperature or time) are selected to ensure that shrinkage during subcritical drying is minimal and the resulting aerogels have a bulk density around 0.12 g/cm³, which is traditionally considered to be the bulk density where the thermal conductivity of silica aerogel is the lowest [J. Fricke, X. Lu, P. Wang, D. Buettner, U. Heinemann, Int. J. Heat Mass Transf. 35 (1992) 2305-2309; J.C.H. Wong, H. Kaymak, S. Brunner, M.M. Koebel, Microporous Mesoporous Mater. 183 (2014) 23-29]. In the method according to the invention, the aging conditions of the silica aerogels are clearly different, i.e. a shorter aging time for a given aging temperature. This allows to induce a well-defined degree of partial pore collapse and densification during subcritical drying. The resulting silica aerogels produced by the method according to the invention thus have a higher bulk density compared to conventional silica aerogels. These higher bulk densities lead to an increase in stiffness of the aerogel granules, but surprisingly, the increase in bulk density for these partially aged and partially collapsed aerogels does not lead to a significant increase in thermal conductivity. For a man skilled in the art, this was not to be expected at all. It is namely generally accepted that the thermal conductivity of silica aerogels directly increases with higher densities, especially when these densities are higher than the density where the thermal conductivity has its lowest value (this is mostly at a density of 0.12 g/cm³ for silica aerogel material. a [J. Fricke, X. Lu, P. Wang, D. Buettner, U. Heinemann, Int. J. Heat Mass Transf. 35 (1992) 2305-2309; J.C.H. Wong, H. Kaymak, S. Brunner, M.M. Koebel, Microporous Mesoporous Mater. 183 (2014) 23-29].

The above described modification of the conventional process, i.e. the change in aging conditions to purposefully density the aerogels to increase stiffness whilst maintaining the desired low thermal conductivity, can be applied to any silica aerogel synthesis strategy. In one particular embodiment, the silica sol is based on silicon alkoxides and polyethoxydisiloxane (PEDS) in particular. Gelation of the ethanolic PEDS based sol is triggered by the addition of a base, followed by aging in the gelation solvent for a range of durations, followed by hydrophobization by immersion in acidic hexamethyldisiloxane (HMDSO), and subcritical, evaporative drying and ambient pressure and elevated temperature. A detailed synthesis procedure is described in the examples.

The properties of the resulting aerogels were subsequently tested for bulk density, thermal conductivity and mechanical properties using the protocols described in the "Summary of the invention" section.

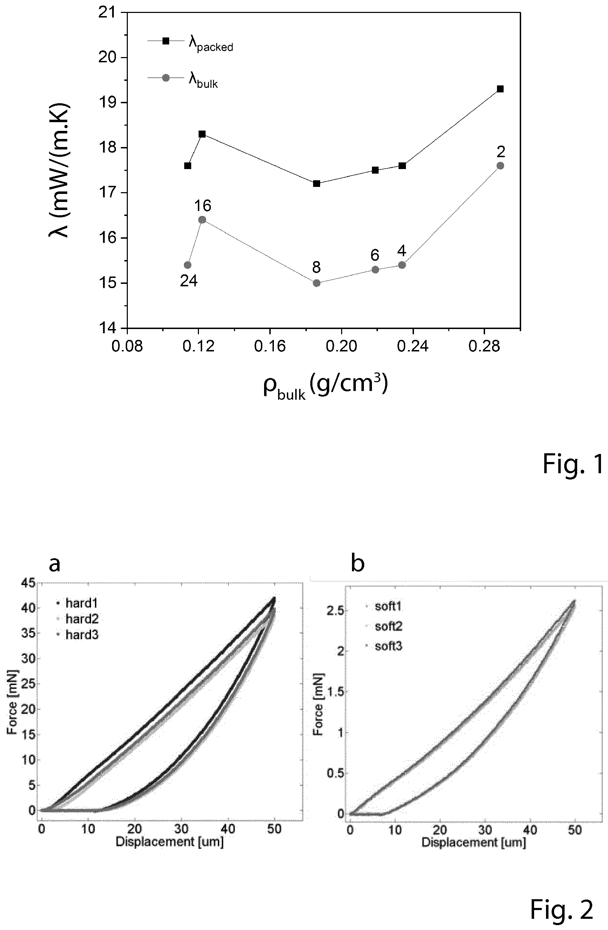

The resulting silica aerogels prepared with different aging times for a constant aging temperature (65°C) display a monotonic decrease in density (ρ_{bulk}) with increasing aging time (Table 1). For example, ρ_{bulk} of a 2 h aged sample is 2.53 times higher than of a 24 h aged sample. The aging dependence on density is strongest for short aging times and less pronounced for longer aging times. For example, ρ_{bulk} after 4 h and 8 h aging are very different with ρ₂ₕ/ρ₈ₕ=1.55, whereas ρ_{bulk} after 16 h and 24 h aging are very similar, with ρ₁₆ₕ/ρ₂₄ₕ=1.07, indicating that the density after 24 h aging is close to the limit of infinite aging at that temperature. Importantly, this controlled shrinkage and change (increase) of density due to short aging has a very limited effect on thermal conductivity (Table 1, Fig. 1). A λ _{bulk} of 0.0154 W/(m•K) was determined for a bulk density of 0.234 (4 h aging), and is similar to the thermal conductivity which was determined for a bulk density of 0.114 (24 h aging). However, the aging time has a strong effect on stiffness, as is shown in Table 1. The stiffness of the APD silica aerogel is 10x higher after 2 h aging (bulk density of 0.309) vs. after 24 h aging (bulk density of 0.118). The increased stiffness of the aerogel granulate also leads to improved mechanical properties of composite materials made thereof (Table 2).

### Examples

**Silica aerogel synthesis:** All silica aerogels were prepared according to the process described by Iswar et al. [Effect of aging on silica aerogel properties. S Iswar, WJ Malfait, S Balog, F Winnefeld, M Lattuada, MM Koebel. Microporous and Mesoporous Materials 241, 293-302, 2017]. The aging time was varied systematically between 2 and 24 hours. The SiO₂ equivalent precursor concentration was constant at 0.057 g/cm³. For a typical synthesis, 9 ml of polyethoxydisiloxane (PEDS-P_{750E20}) was added to 21 ml of ethanol and 1 ml of distilled water. The mixture was stirred for 5-10 min at room temperature. Gelation was triggered through the addition of 0.36 ml of 5.5 M ammonium hydroxide solution (NH₄OH in water). The gels were covered with an additional 0.4 ml of ethanol and then aged for different times at 65°C. The aged gels were hydrophobized by soaking at 65°C for 24 h in a mixture of 60 ml of hexamethyldisiloxane (HMDSO), 0.24 ml of concentrated hydrochloric acid (37% purity) and 2.2 ml of ethanol. The gels were dried for 2h at 150°C at ambient pressure. Two sets of samples were prepared under identical conditions: one set was characterized for bulk density and thermal conductivity and one set was characterized for bulk density and stiffness. Note that the bulk densities for both sets of samples are in good agreement for a given aging time, indicative of the reproducibility of the partial pore collapse as a function of aging time.

**Silica aerogel properties:** The properties of the silica aerogel granulate prepared for different aging times are listed in Table 1. The partial pore collapse for samples prepared with short aging times leads to an increase in density by a factor up to 2.53 and a corresponding increase in stiffness by a factor up to 10.4. Despite this strong change in density and mechanical properties, the effect on thermal conductivity is limited.

**Table 1: Thermo-mechanical properties of APD silica aerogels.**

| | | | λ measurements | | | k measurements | |
|---|---|---|---|---|---|---|---|
| Aging time (h) | ρ_{bulk} (g/cm³) | ρ_{packed} (g/cm³) | ρ_{A}/ρ₂₄ₕ | λ_{packed} (mW·m⁻¹·K⁻¹) | λ_{bulk} (mW·m⁻¹·K⁻¹) | ρ_{bulk} (g/cm³) | Stiffness (k) (N/m) |
| 2 | 0.289 | 0.291 | 2.53 | 19.3 ± 0.2 | 17.6 ± 1.0 | 0.309 | 738 ± 160 |
| 4 | 0.234 | 0.236 | 2.05 | 17.6 ± 0.1 | 15.4 ± 1.0 | 0.255 | 486 ± 137 |
| 6 | 0.219 | 0.214 | 1.92 | 17.5 ± 0.2 | 15.3 ± 1.0 | 0.211 | 178 ± 20 |
| 8 | 0.186 | 0.145 | 1.63 | 17.2 ± 0.1 | 15.0 ± 1.0 | 0.181 | 140 ± 44 |
| 16 | 0.122 | 0.095 | 1.07 | 18.3 ± 0.2 | 16.4 ± 1.0 | 0.123 | 73 ± 29 |
| 24 | 0.114 | 0.089 | 1 | 17.6 ± 0.1 | 15.4 ± 1.0 | 0.118 | 71 ± 29 |

**Composites from dense, superinsulating silica aerogels:** Glued aerogel boards were prepared from aerogel granulate and powder (in a 63:37 volume ratio) pressed into a 50x50x10 mm³ Teflon mold and glued with 2 g of an organic binder. Organic binders for aerogel composites are well-known from prior art, for example US9115025B2, EP2620567A2, DE102011119029B4, US5656195A, EP0489319A2, US5294480A. The samples were removed from the mold after the glue was allowed to set overnight. The thermal conductivity was determined from these plates. In addition, 30x30x30 mm³ cubes were prepared for mechanical tests. A first set of samples was prepared where both the granulate (G) and the powder (P) was prepared by 24h aging and a second set of samples had been prepared from 2h aged granulate (G) and 24h aged powder (P). The average of two samples for each condition is listed in Table 2. The inclusion of dense, 2h-aged granulate leads to an increase in E-modulus of the composite material by a factor of 2.8 with only a minor increase in thermal conductivity.

**Table 2. Properties of glued aerogel composites.**

| Aging time (h) | 24h G and 24h P | 2h G and 24h P |
|---|---|---|
| Thermal conductivity (W/(m.K)) | 0.0181 | 0.0207 |
| E-modulus (MPa) | 0.271 | 0.768 |
| Final compressive strength (MPa) | 0.038 | 0.063 |
| G=granulate, P=powder | | |

## Claims

1. A method of producing a silica aerogel material in granulate or powder form, comprising the steps of:
a) preparing a silicon oxide gel in a solvent selected from organic solvents, water, and mixtures thereof;
b) triggering of the gelation of the sol by adding a gelation triggering agent, thereby forming a gel having an initial SiO₂ equivalent concentration of 3 to 13 % by weight;
c) subjecting the gel to an aging process for a predetermined aging time (t_{A}), thereby forming an aged gel;
d) subjecting the aged gel obtained in step c) to a hydrophobization step;
e) removing the solvent mixture by subcritical drying, thereby forming the aerogel material;
**characterized in that** the predetermined aging time (t_{A}) is selected such that the aerogel material has a bulk aerogel density (ρ_{A}) in the range of 1.15 to 3 times a limiting aerogel density (ρ_{∞}) obtainable in the limit of long aging times.

2. The method according to claim 1, wherein the silicon oxide sol is an alkoxide based silicon oxide sol, particularly hydrolyzed tetraethyl orthosilicate (TEOS) or polyethoxydisiloxane (PEDS).

3. The method according to claim 1 or claim 2, wherein the solvent is an alcoholic solvent comprising 50 to 85% by weight of a lower alcohol in water, and wherein the gelation triggering agent is a strong acid.

4. The method according to claim 1 or claim 2, wherein the solvent is an alcoholic solvent comprising 92 to 98% by weight of a lower alcohol in water, and wherein the gelation triggering agent is a strong base.

5. The method according to claim 1, wherein the silicon oxide sol is an ion exchanged water glass solution, wherein the solvent is substantially aqueous, and wherein the gelation triggering agent is a base.

6. The method according to claim 1, wherein the silicon oxide sol is water glass, wherein the solvent is substantially aqueous, and wherein the gelation triggering agent is an acid.

7. The method according to one of the preceding claims, wherein the hydrophobization step comprises immersing the aged gel in a solution of a silylating agent, wherein the silylating agent is preferably selected from hexamethyldisiloxane, hexamethyldisalazane and trimethylchlorosilane.

8. The method according to one of the preceding claims, wherein the subcritical drying step e) is carried out at a temperature from 30 to 200°C, preferably from 70 to 160°C, and more preferably from 120 to 160°C, and at a pressure of 10 mbar to 2 bar, preferably at a pressure between 0.7 and 1.2 bar, and most preferably at a pressure between 0.9 and 1.1 bar.

9. The method according to one of the preceding claims, further comprising the step of adding a reactive monomer or prepolymer in the course of steps a) through c), whereby the aerogel material formed in step e) comprises a predetermined polymeric fraction.

10. A silica aerogel material in granulate or powder form obtainable by the method according to one of the preceding claims, **characterized by** the following properties in combination:
A) either
- a packed bed thermal conductivity λ_{pack} of < 0.019 W/(m•K);
- a bulk thermal conductivity λ_{bulk} of 0.012 to 0.016 W/(m•K);
- a bulk density ρ_{bulk} of 0.15 to 0.25 g/cm³; and
- a stiffness k increased by a factor of 2 to 20 compared to a reference silica aerogel material with a bulk density ρ_{bulk} of approximately 0.1 g/cm³. and a bulk thermal conductivity λ_{bulk} of 0.012 to 0.015 W/(m•K);
B) or else
- a packed bed thermal conductivity λ_{pack} of < 0.021 W/(m•K);
- a bulk thermal conductivity λ_{bulk} of 0.012 to 0.018 W/(m•K);
- a bulk density ρ_{bulk} of more than 0.25 to 0.35 g/cm³; and
- a stiffness k increased by a factor of 5 to 50 compared to a reference silica aerogel material with a bulk density ρ_{bulk} of approximately 0.1 g/cm³. and a bulk thermal conductivity λ_{bulk} of 0.012 to 0.015 W/(m•K).

11. The silica aerogel material according to claim 10 obtainable by the method according to claim 9, comprising a polymeric fraction of 1 to 50% by weight.

12. A composite material, comprising the silica aerogel material according to claim 10 and further comprising a binder.

13. A composite material, comprising the silica aerogel material according to claim 10, which is incorporated in a polymeric foam.

14. The composite material according to claim 12 or claim 13, further comprising a reinforcement matrix material.

15. Use of the composite material according to one of claims 12 to 14 as a form part, insulation board or panel.
